# EUROPEAN PATENT APPLICATION

(11) **EP 4 712 580 A1**
(43) Date of publication of application: **18.03.2026**
(21) Application number: 23936093.6
(22) Date of filing: 10.05.2023
(51) Int. Cl.: H04W 48/20

(54) **ACCESS INDICATION METHOD, APPARATUS, DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/093345
(87) International publication number: WO 2024/229772

(57) **Abstract**

Disclosed in embodiments of the present disclosure are an access indication method, an apparatus, a device, a chip system, and a storage medium, which can be applied to a communication system. The method comprises: an ATG terminal receiving first information sent by a cell, wherein the first information is at least used for indicating the type of the cell; and according to the first information, determining whether the cell allows the ATG terminal to access. By implementing the method of the present disclosure, whether the ATG terminal is allowed to access the cell can be effectively indicated.

## Description

### TECHNICAL FIELD

The present disclosure relates to the field of communication technology, and in particular to a method and apparatus for access indication, a device, and a storage medium.

### BACKGROUND

An air to ground (ATG) terminal may attempt to access a cell for communication, and the cell may be, for example, an ATG cell, a non-terrestrial network (NTN) cell, a terrestrial network (TN) cell, etc. The ATG cell may be deployed using a TN frequency, and the used TN frequency may be the same as a frequency of the TN cell. The NTN cell may also be deployed using a TN frequency. In the related art, it is not possible to effectively indicate whether an ATG terminal is allowed to access a cell.

### SUMMARY

Embodiments of the present disclosure provide a method and an apparatus for access indication, a device, a chip system, a storage medium, a computer program, and a computer program product, which may be applied in the field of communication technology and may effectively indicate whether air to ground (ATG) terminal is allowed to access a cell.

In a first aspect, an embodiment of the present disclosure provides a method for access indication, performed by an ATG terminal. The method includes: receiving first information sent by a cell, in which the first information at least indicates a type of the cell; and determining whether the ATG terminal is allowed to access the cell based on the first information.

In a second aspect, an embodiment of the present disclosure provides a method for access indication, performed by an access network device. The method includes: sending first information to an ATG terminal, in which the first information at least indicates a type of a cell, and the first information is also used by the ATG terminal to determine whether the ATG terminal is allowed to access the cell.

In a third aspect, an embodiment of the present disclosure provides a communication apparatus having functions of implementing some or all of the functions of the ATG terminal in the method described in the above first aspect. For example, the functions of the communication apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

Optionally, in an embodiment of the disclosure, the structure of the communication apparatus may include a transceiver module and a processing module, and the processing module is configured to support the communication apparatus to perform corresponding functions in the above methods. The transceiver module is configured to support communication between the communication apparatus and other devices. The communication apparatus may further include a storage module, which is coupled to the transceiver module and the processing module and stores computer programs and data necessary for the communication apparatus.

As an example, the processing module may be a processor, the transceiver module may be a transceiver or a communication interface, and the storage module may be a memory.

In a fourth aspect, an embodiment of the present disclosure provides another communication apparatus having functions of implementing some or all of the functions of the access network device in the method described in the above second aspect. For example, the functions of the communication apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

Optionally, in an embodiment of the present disclosure, the structure of the communication apparatus may include a transceiver module and a processing module, and the processing module is configured to support the communication apparatus to perform corresponding functions in the above methods. The transceiver module is configured to support communication between the communication apparatus and other devices. The communication apparatus may further include a storage module, which is coupled to the transceiver module and the processing module and stores computer programs and data necessary for the communication apparatus.

In a fifth aspect, an embodiment of the present disclosure provides a communication device, which includes a processor. When the processor calls a computer program in a memory, the method for access indication described in the above first aspect is executed.

In a sixth aspect, an embodiment of the present disclosure provides a communication device, which includes a processor. When the processor calls a computer program in a memory, the method for access indication described in the above second aspect is executed.

In a seventh aspect, an embodiment of the present disclosure provides a communication device, which includes a processor and a memory storing a computer program. When the computer program is executed by the processor, the communication device is caused to perform the method for access indication described in the above first aspect.

In an eighth aspect, an embodiment of the present disclosure provides a communication device, which includes a processor and a memory storing a computer program. When the computer program is executed by the processor, the communication device is caused to perform the method for access indication described in the above second aspect.

In a ninth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method for access indication described in the above first aspect.

In a tenth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method for access indication described in the above second aspect.

In an eleventh aspect, an embodiment of the present disclosure provides a communication system, including the communication apparatus described in the above third aspect and the communication apparatus described in the above fourth aspect, or including the communication device described in the above fifth aspect and the communication device described in the above sixth aspect, or including the communication device described in the above seventh aspect and the communication device described in the above eighth aspect, or including the communication device described in the above ninth aspect and the communication device described in the above tenth aspect.

In a twelfth aspect, an embodiment of the present disclosure provides a computer-readable storage medium for storing instructions used by the above ATG terminal or the access network device. When the instructions are executed, the ATG terminal or the access network device is caused to perform the method for access indication as described above.

In a thirteenth aspect, the present disclosure further provides a computer program product including a computer program, which, when running on a computer, enables the computer to perform the method for access indication as described above.

In a fourteenth aspect, the present disclosure provides a chip system including at least one processor and an interface for supporting the ATG terminal to implement the functions involved in the above first aspect, for example, determining or processing at least one of data or information involved in the above method.

In a possible design, the chip system also includes a memory, which is used to store computer programs and data necessary for the ATG terminal. The chip system may be composed of chips, or may include chips and other discrete devices.

In a fifteenth aspect, the present disclosure provides a chip system including at least one processor and an interface for supporting the access network device to implement the functions involved in the above second aspect, for example, determining or processing at least one of data or information involved in the above method.

In a possible design, the chip system also includes a memory, which is used to store computer programs and data necessary for the access network device. The chip system may be composed of chips, or may include chips and other discrete devices.

In a sixteenth aspect, the present disclosure provides a computer program, which, when running on a computer, enables the computer to perform the method for access indication as described above.

In summary, the method and the apparatus for access indication, the device, the chip system, the storage medium, the computer program, and the computer program product according to the embodiments of the present disclosure may achieve the following technical effects:

By receiving the first information sent by the cell, in which the first information at least indicates the type of the cell, and determining whether the ATG terminal is allowed to access the cell based on the first information, it is possible to effectively indicate whether the ATG terminal is allowed to access the cell.

### BRIEF DESCRIPTION OF THE DRAWINGS

In order to more clearly explain the technical solutions in the embodiments of the disclosure or the background, accompanying drawings needed to be used in the embodiments of the disclosure or the background are described below.
FIG. 1 is a diagram of an architecture of a communication system according to an embodiment of the disclosure.
FIG. 2 is a diagram of an application scenario in an embodiment of the present disclosure.
FIG. 3 a flowchart of a method for access indication according to an embodiment of the disclosure.
FIG. 4 is a flowchart of a method for access indication according to an embodiment of the disclosure.
FIG. 5 is a flowchart of a method for access indication according to an embodiment of the disclosure.
FIG. 6 is a flowchart of another method for access indication according to an embodiment of the disclosure.
FIG. 7 is a flowchart of another method for access indication according to an embodiment of the disclosure.
FIG. 8 is a flowchart of another method for access indication according to an embodiment of the disclosure.
FIG. 9 is a flowchart of another method for access indication according to an embodiment of the disclosure.
FIG. 10 is a structural diagram of a communication apparatus according to an embodiment of the present disclosure.
FIG. 11 is a structural diagram of a communication device according to an embodiment of the present disclosure.
FIG. 12 is a structural diagram of a chip according to an embodiment of the present disclosure.

### DETAILED DESCRIPTION

Reference will now be made in detail to exemplary embodiments, examples of which are illustrated in the accompanying drawings. When the following description refers to the drawings, unless otherwise indicated, the same numerals in different drawings represent the same or similar elements. The implementations described in the following exemplary embodiments do not represent all implementations consistent with the embodiments of the present disclosure. Rather, they are merely examples of apparatuses and methods consistent with some aspects of the embodiments of the disclosure as recited in the appended claims.

The terms used in the embodiments of the present disclosure are only for the purpose of describing specific embodiments and are not intended to limit the embodiments of the present disclosure. As used in the present disclosure and the appended claims, the singular forms "a/an" and "the" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc. may be used to describe various information in the embodiments of the present disclosure, the information should not be limited to these terms. These terms are used only to distinguish information of identical type from one another. For example, without departing from the scope of the embodiments of the present disclosure, first information may also be referred to as second information, and similarly, second information may also be referred to as first information. Depending on the context, the words "if" and "in case of/that" as used herein may be interpreted as "when" or "while" or "in response to a determination."

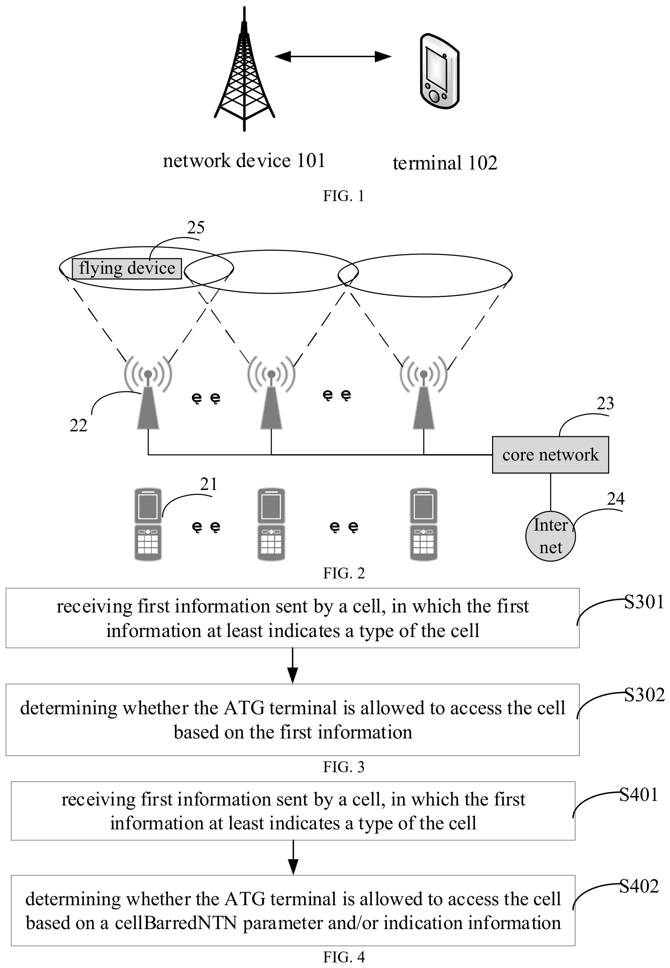

with reference to FIG. 1, it is a diagram of an architecture of a communication system according to an embodiment of the present disclosure. The communication system may include but is not limited to an access network device and a terminal. The number and form of the devices shown in FIG. 1 are for example only, which do not constitute a limitation on the embodiments of the present disclosure. In actual applications, two or more access network devices and two or more terminals may be included. The communication system shown in FIG. 1 includes one access network device 101 and two terminals 102 as an example.

It needs to be noted that the technical solutions of the embodiments of the present disclosure may be applied to various communication systems, for example, a long term evolution (LTE) system, a fifth generation (5G) mobile communication system, a 5G NR system, or other future new mobile communication systems.

The access network device 101 in the embodiment of the present disclosure is an entity on the network side for transmitting or receiving signals. For example, the access network device 101 may be an evolved NodeB (eNB), a transmission reception point (TRP), a next generation NodeB (gNB) in an NR system, a private network system, a base station in other future mobile communication systems, or an access node in a wireless fidelity (WiFi) system, etc. The specific technology and specific device form adopted by the access network device are not limited in the embodiments of the present disclosure.

The access network device according to the embodiment of the present disclosure may be composed of a central unit (CU) and a distributed unit (DU). The CU may also be called a control unit. The CU-DU structure may be used to split a protocol layer of the access network device such as a base station, so that some functions of the protocol layer is centrally controlled by the CU, and the remaining part or all of the functions of the protocol layer is distributed in the DU, which is centrally controlled by the CU.

The terminal 102 in the embodiment of the present disclosure is an entity on a user side for receiving or transmitting signals, such as a mobile phone. The terminal may also be referred to as a user equipment (UE), a mobile station (MS), a mobile terminal (MT), etc. The terminal may be a vehicle with a communication capability, a smart car, a mobile phone, a wearable device, a tablet computer, a computer with a wireless transceiver capability, a virtual reality (VR) terminal, an augmented reality (AR) terminal, a wireless terminal in industrial control, a wireless terminal in self-driving, a wireless terminal in remote medical surgery, a wireless terminal in smart grids, a wireless terminal in transportation safety, a wireless terminal in a smart city, a wireless terminal in a smart home, or the like.

The specific technology and specific device form adopted by the terminal are not limited in the embodiments of the present disclosure.

It may be understood that the communication system described in the embodiments of the present disclosure is for the purpose of more clearly illustrating the technical solution of the embodiments of the present disclosure, and does not constitute a limitation on the technical solution according to the embodiments of the present disclosure. Those skilled in the art may know that with the evolution of the system architecture and the emergence of new service scenarios, the technical solution according to the embodiments of the present disclosure is also applicable to similar technical problems.

The application scenarios of the embodiments of the present disclosure may be illustrated as follows.

The method for access indication in the embodiment of the present disclosure may be used in an air to ground (ATG) scenario. As shown in FIG. 2, it is a diagram of an application scenario in the embodiment of the present disclosure. In the ATG scenario, it includes several ATG access nodes 21, several ATG air interfaces 22, a core network device 23, the Internet 24, and a flying device 25 (such as an aircraft). The ATG access node 21 may be, for example, an ATG terminal (for example, ATG UE), and the ATG air interface may be, for example, an ATG gNB (ATG base station). The ATG terminal is a special UE. The air interface may be used from the flying device 25 to the ATG gNB, and a Wireless Fidelity (WiFi) interface may be used from the flying device 25 to the user terminal (located in the flying device). The link between the ATG terminal and the ATG gNB is considered a service link. The size of a cell covered by the ATG air interface 22 may reach 300 kilometers (diameter). In the scenario shown in FIG. 2, an ATG cell may be deployed using a terrestrial network (TN) frequency, and a non-terrestrial network (NTN) cell may also be deployed using the TN frequency.

In the related art, the access network device sends a message for access indication to a plurality of terminals in a broadcast manner. In this way, the access indication received by each terminal is identical, for example, all the plurality of terminals get access to the cell, or all the plurality of terminals do not get access to the cell. Therefore, it is not possible to effectively prevent the NTN UE from accessing the ATG cell, and prevent the ATG UE from accessing the NTN cell, resulting in the inability to effectively indicate whether the ATG terminal is allowed to access the cell.

In order to solve the above technical problem, the embodiments of the present disclosure provide a method for access indication that may effectively indicate whether the ATG terminal is allowed to access the cell.

It needs to be noted that the method for access indication according to any embodiment of the present disclosure may be executed alone, or in combination with possible implementations in other embodiments, or in combination with any technical solution in the related art.

The method and apparatus for access indication according to the present disclosure are described in detail below with reference to the accompanying drawings. FIG. 3 is a flowchart of a method for access indication according to an embodiment of the present disclosure, which is performed by an ATG terminal. The method for access indication in this embodiment may be applied to the ATG terminal, which is not limited herein.

As shown in FIG. 3, the method may include but is not limited to the following steps S301-S302.

At S301, first information is received from a cell. The first information at least indicates a type of the cell.

The information indicating the type of the cell may be referred to as the first information, which is not limited herein.

In some embodiments, the type of the cell may be, for example, an ATG cell, an NTN cell, etc., which is not limited herein.

In some embodiments, the cell may be a cell supporting access of an ATG terminal, which may be understood as a cell having the capability of supporting access of the ATG terminal, which is not limited herein.

In some embodiments, the ATG terminal may receive the first information sent by the cell, which is not limited herein.

In some embodiments, if the ATG terminal is an ATG UE, the cell supporting access of the ATG UE may be, for example, an ATG cell or an NTN cell, which is not limited herein.

Of course, the cell may also be any other possible cell, which is not limited herein.

In some embodiments, the cell may send the first information to the ATG terminal in a broadcast manner. After receiving the first information, the ATG terminal may determine the type of the cell based on the first information, which is not limited herein.

In some embodiments, if the ATG terminal receives the first information, it may be determined that the type of the cell is an ATG cell. That is, it is implicitly indicated that the type of the cell is the ATG cell by sending the first information, which is not limited herein.

In some embodiments, if the ATG terminal receives the first information, the ATG terminal may further parse an identifier from the first information and determine the type of the cell based on the identifier, which is not limited herein.

In some embodiments, the identifier may be, for example, indication information, which may indicate the type of the cell. That is, if the first information includes the indication information, the type of the cell may be determined directly based on the indication information, which is not limited herein.

At S302, it is determined whether the ATG terminal is allowed to access the cell based on the first information.

In some embodiments, after receiving the first information, the ATG terminal may also consider the first information to determine whether the ATG terminal is allowed to access the cell, which is not limited herein.

In some embodiments, the first information may indicate the type of the cell. The first information may also indicate whether the ATG terminal is allowed to access the cell, which is not limited herein.

In some embodiments, the first information may include one or more parameters, which may be used to determine whether the ATG terminal is allowed to access the cell, which is not limited herein.

In the embodiments of the present disclosure, not allowed access may be understood as prohibited access, such as barred. Specifically, the cell is barred from access, for example. Conversely, allowed access may be understood as non-prohibited access, or the access to the cell is not prohibited, etc., such as not barred, which is not limited herein.

In some embodiments, the ATG UE receives information broadcast by the cell, the information indicating that the cell is an ATG cell, and determines whether the cell is barred from access based on the information, which is not limited herein.

In some embodiments, the ATG UE is an optional example of the ATG terminal, information indicating that the cell is an ATG cell is an optional example of the first information, and the ATG cell is an optional example of the cell, which is not limited herein.

Therefore, in this embodiment, the first information is received from the cell, in which the first information at least indicates the type of the cell, and it is determined whether the ATG terminal is allowed to access the cell based on the first information, which may effectively indicate whether the ATG terminal is allowed to access the cell.

In the method for access indication according to the embodiment of the present disclosure, the ATG terminal may receive a message sent by the cell, in which the message includes the first information, and the message is at least one of a system information block 1 (SIB1) or a system information block 19 (SIB19), which is not limited herein.

In some embodiments, the message may be, for example, a system message, which is not limited.

In some embodiments, the cell may broadcast a system message, and the ATG terminal may receive the system message broadcast by the cell, which is not limited herein.

In some embodiments, the first information may be carried in the message. For example, the first information may be carried in one or more of SIB1 and SIB19, which is not limited herein.

Therefore, the ATG terminal may receive the message sent by the cell to determine the first information indicated by the cell, which thus effectively improves the indication security of the first information and effectively avoids occupying additional indication overhead.

In the method for access indication according to the embodiment of the present disclosure, the first information may include a cellBarredNTN parameter and one or more items of indication information, in which the indication information indicates whether the ATG terminal is allowed to access the cell. Thus, the cellBarredNTN parameter and the one or more items of indication information may be combined to effectively indicate whether the ATG terminal is allowed to access the cell, so that the method for access indication may be flexibly applied to personalized communication scenarios.

In some embodiments, the cellBarred parameter indicates an access barring state of the cell, which may for example be barred (the access is barred) or not barred (the access is not barred), which is not limited herein.

In some examples, the cellBarred parameter may be a first value such as barred (indicating that the access is barred or not allowed, etc.). Or, the cellBarred parameter may be a second value such as not barred (indicating that the access is not barred or allowed, etc.), which is not limited herein.

In the embodiments of the present disclosure, the cellBarred parameter is the first value, which may be understood that the cellBarred parameter is configured as barred. The cellBarred parameter is the second value, which may be understood that the cellBarred parameter is configured as not barred, which is not limited herein.

In some embodiments, if the cellBarred parameter is configured as barred, it may be understood that the terminal is barred to access the cell; and if the cellBarred parameter is configured as not barred, it may be understood that the terminal is allowed to access the cell, which is not limited herein.

In some embodiments, the cellBarredNTN parameter may indicate whether the cell is available for an NTN connection, which is not limited herein.

In some embodiments, the cellBarredNTN parameter may also indicate whether the ATG terminal is allowed to access, which is not limited herein.

In some embodiments, the value of the cellBarredNTN parameter may also be equal to "barred" or "not barred", which is not limited herein.

In some examples, the cellBarredNTN parameter may be a first value such as barred (indicating that the access is barred or not allowed, etc.). Or, the cellBarredNTN parameter may be a second value such as not barred (indicating that the access is not barred or allowed, etc.), which is not limited herein.

In the embodiment of the present disclosure, the cellBarredNTN parameter is the first value, which may be understood as the cellBarredNTN parameter is configured as barred. The cellBarredNTN parameter is the second value, which may be understood that the cellBarredNTN parameter is configured as not barred, which is not limited herein.

In some embodiments, if the value of the cellBarredNTN parameter is barred (the access is barred), it means that the ATG terminal is not allowed to access; if the value of the cellBarredNTN parameter is not barred ((the access is not barred), it means that the ATG terminal is allowed to access, which is not limited herein.

In some embodiments, the indication information may indicate whether the ATG terminal is allowed to access the cell, which is not limited herein.

In some embodiments, the indication information may indicate barred or not barred, which is not limited herein.

In some examples, the indication information may be a first value such as barred (indicating that the access is barred or not allowed, etc.). Or, the indication information may be a second value such as not barred (indicating that the access is not barred or allowed, etc.), which is not limited herein.

In the embodiments of the present disclosure, the indication information is the first value, which may be understood that the indication information is configured as barred. The indication information is the second value, which may be understood that the indication information is configured as not barred, which is not limited herein.

In some embodiments, the indication information may be for example a cellBarredATG parameter, which is not limited herein.

In some embodiments, if the first information includes the cellBarredATG parameter, it may be clearly indicated that the cell supports access of the ATG UE (ATG UE is an optional example of the ATG terminal), which is not limited herein.

In some examples, the cellBarredATG parameter may be a first value such as barred (indicating that the access is barred or not allowed, etc.). Or, the cellBarredATG parameter may be a second value such as not barred (indicating that the access is not barred or allowed, etc.), which is not limited herein.

In the embodiment of the present disclosure, the cellBarredATG parameter is the first value, which may be understood that the cellBarredATG parameter is configured as barred. The cellBarredATG parameter is the second value, which may be understood that the cellBarredATG parameter is configured as not barred, which is not limited herein.

In some embodiments, the cellBarredATG parameter may indicate barred or not barred. If the cellBarredATG parameter indicates barred, it means that the ATG UE is not allowed to access the cell. If the cellBarredATG parameter indicates not barred, it means that the ATG UE is allowed to access the cell, which is not limited herein.

FIG. 4 is a flowchart of a method for access indication according to an embodiment of the present disclosure, which is performed by an ATG terminal. The method for access indication in this embodiment may be applied to the ATG terminal, which is not limited herein.

As shown in FIG. 4, the method may include but is not limited to the following steps S401-S402.

At S401, first information is received from a cell. The first information at least indicates a type of the cell.

For the detailed description of S401, reference may be made to the above embodiment, which will not be repeated here.

At S402, it is determined whether the ATG terminal is allowed to access the cell based on a cellBarredNTN parameter and/or indication information.

In some embodiments, the first information may include a cellBarred parameter. The cellBarred parameter indicates an access barring state of the cell, for example, barred (the access is barred) or not barred (the access is not barred), which is not limited herein.

In some embodiments, if the cellBarred parameter is configured as barred, it may be understood that the terminal is not allowed (barred) to access the cell; if the cellBarred parameter is configured as not barred, it may be understood that the terminal is allowed to access the cell, which is not limited herein.

In some embodiments, whether the ATG terminal is allowed to access the cell may be determined based on the cellBarredNTN parameter and/or the indication information, which is not limited herein.

In some embodiments, whether the ATG terminal is allowed to access the cell may be determined based on whether the first information includes the indication information, which is not limited herein.

In some embodiments, whether the ATG terminal is allowed to access the cell may also be determined based on whether the first information includes the cellBarredNTN parameter and indication information, which is not limited herein.

The embodiments may be applied to the scenario where the ATG terminal is an ATG UE. The ATG UE may be an optional example of the ATG terminal. If the first information includes the cellBarred parameter, the ATG UE may ignore the cellBarred parameter, for example, ignore the cellBarred parameter itself or the value of the cellBarred parameter, which is not limited herein.

In some embodiments, for the ATG UE, the cellBarred parameter broadcast in a master information block (MIB) may be ignored, which is not limited herein.

In some embodiments, the cellBarred parameter may be included in the MIB. Then, when the ATG UE receives the cellBarred parameter broadcast in the MIB, the cellBarred parameter may be ignored, which is not limited herein.

In some embodiments, the value of the cellBarred parameter may be set as barred (the access is barred). If a UE that does not support the ATG recognizes the cellBarred parameter and the cellBarred parameter is set as barred (the access is barred), the UE that does not support the ATG may not select the cell, which is not limited herein.

In some embodiments, if the cell is an ATG cell, the value "barred" of the cellBarred parameter in the MIB may be set by the ATG cell to prevent the UE that does not support the ATG from selecting the cell, which is not limited herein.

In some embodiments, since the ATG UE may ignore the cellBarred parameter broadcast in the MIB, whether the ATG UE selects the cell may not be affected by the value of the cellBarred parameter, which is not limited herein.

In this embodiment, it may be effectively applied to an ATG cell that broadcasts the SIB19 and an ATG cell that do not broadcast the SIB19. The UE that does not support the ATG is effectively avoided from selecting the ATG cell, and the UE that supports the ATG (i.e., the ATG UE) is effectively instructed to select the ATG cell. As such, the flexibility of access indication is effectively improved.

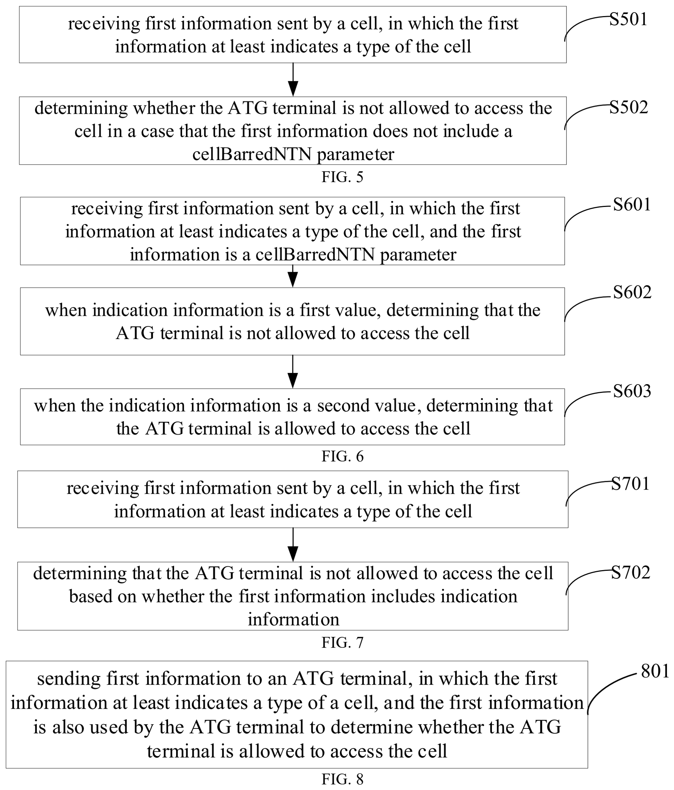

FIG. 5 is a flowchart of a method for access indication according to an embodiment of the present disclosure, which is performed by an ATG terminal. The method for access indication in this embodiment may be applied to the ATG terminal, which is not limited herein.

As shown in FIG. 5, the method may include but is not limited to the following steps S501-S502.

At S501, first information is received from a cell. The first information at least indicates a type of the cell.

For the detailed description of S501, reference may be made to the above embodiment, which will not be repeated here.

At S502, in a case that the first information does not include a cellBarredNTN parameter, it is determined that the ATG terminal is not allowed to access the cell.

In some embodiments, the first information does not include the cellBarredNTN parameter, which may also be understood as the first information being indication information, which is not limited herein.

In some embodiments, the cellBarredNTN parameter may indicate whether the cell is available for an NTN connection, which is not limited herein.

In some embodiments, the cellBarredNTN parameter may also indicate whether the ATG terminal is allowed to access, which is not limited herein.

In some examples, the cellBarredNTN parameter may be a first value such as barred (indicating that the access is barred or not allowed, etc.). Or, the cellBarredNTN parameter may be a second value such as not barred (indicating that the access is not barred or allowed, etc.), which is not limited herein.

In the embodiment of the present disclosure, the cellBarredNTN parameter is the first value, which may be understood as the cellBarredNTN parameter is configured as barred. The cellBarredNTN parameter is the second value, which may be understood that the cellBarredNTN parameter is configured as not barred, which is not limited herein.

In some embodiments, the value of the cellBarredNTN parameter may be barred or not barred, which is not limited herein.

In some embodiments, if the value of the cellBarredNTN parameter is barred (the access is barred), it means that the ATG terminal is not allowed to access; if the value of the cellBarredNTN parameter is not barred ((the access is not barred), it means that the ATG terminal is allowed to access, which is not limited herein.

In some embodiments, in a case that the first information does not include the cellBarredNTN parameter, it may be directly determined that the ATG terminal is not allowed to access the cell, which is not limited herein.

The method for access indication according to this embodiment may be applied to the scenario where the ATG terminal is an ATG UE. The ATG UE may be an optional example of the ATG terminal. If it is determined that the first information does not include the cellBarredNTN parameter, it may be directly determined that the ATG UE is not allowed to access the cell, which is not limited herein.

In some embodiments, for an ATG UE, if the cellBarredNTN parameter is not broadcast in the SIB1, the ATG UE considers/determines that access to the cell (e.g., an optional example of the cell) is barred, which is not limited herein.

In some embodiments, the cellBarredNTN parameter may not be included in the SIB1. Thus, if the UE is an ATG UE, the ATG UE may directly determine that the cell is barred (access to the cell is barred) in the case of determining that the cellBarredNTN parameter is not broadcast in the SIB1. That is, it is determined that the ATG UE is not allowed to access the cell, which is not limited herein.

In some embodiments, the ATG cell is regarded as a special NTN cell, which may also be understood as the ATG cell being used as an NTN cell, for example, the cell is an NTN cell, which is not limited herein.

In this embodiment, it may be effectively applied to an ATG cell that broadcasts the SIB19, and the ATG terminal is effectively avoided from selecting the NTN cell. As such, the flexibility of access indication is effectively improved.

FIG. 6 is a flow chart of another method for access indication according to an embodiment of the present disclosure, which is performed by an ATG terminal. The method for access indication in this embodiment may be applied to the ATG terminal, which is not limited herein.

As shown in FIG. 6, the method may include but is not limited to the following steps S601-S603.

At S601, first information is received from a cell. The first information at least indicates a type of the cell, and the first information is a cellBarredNTN parameter.

For the detailed description of S601, reference may be made to the above embodiment, which will not be repeated here.

At S602, when indication information is a first value, it is determined that the ATG terminal is not allowed to access the cell.

At S603, when the indication information is a second value, it is determined that the ATG terminal is allowed to access the cell.

In some embodiments, the cellBarredNTN parameter may indicate whether the cell is available for an NTN connection, which is not limited herein.

In some embodiments, the cellBarredNTN parameter may also indicate whether the ATG terminal is allowed to access, which is not limited herein.

In some examples, the cellBarredNTN parameter may be a first value such as barred (indicating that the access is barred or not allowed, etc.). Or, the cellBarredNTN parameter may be a second value such as not barred (indicating that the access is not barred or allowed, etc.), which is not limited herein.

In the embodiment of the present disclosure, the cellBarredNTN parameter is the first value, which may be understood as the cellBarredNTN parameter is configured as barred. The cellBarredNTN parameter is the second value, which may be understood that the cellBarredNTN parameter is configured as not barred, which is not limited herein.

In some embodiments, if the value of the cellBarredNTN parameter is barred (the access is barred), it means that the ATG terminal is not allowed to access; if the value of the cellBarredNTN parameter is not barred ((the access is not barred), it means that the ATG terminal is allowed to access, which is not limited herein.

The method for access indication according to this embodiment may be applied to the scenario where the ATG terminal is an ATG UE. The ATG UE may be an optional example of the ATG terminal. If it is determined that the first information is the cellBarredNTN parameter, the ATG UE may determine whether the ATG UE is allowed to access the cell based on the cellBarredNTN parameter, which is not limited herein.

The method for access indication according to this embodiment may be applied to the scenario where the ATG terminal is an ATG UE (in this scenario, the ATG UE may be regarded as an NTN UE, and the ATG cell may be regarded as an NTN cell). The ATG UE may be an optional example of the ATG terminal, the ATG cell is an optional example of the cell, and the NTN cell may be another optional example of the cell. If it is determined that the first information includes only the cellBarredNTN parameter, the ATG UE may determine whether the ATG UE is allowed to access the cell based on the value of the cellBarredNTN parameter, which is not limited herein.

In some embodiments, for the ATG UE, if the value of the cellBarredNTN parameter broadcast in the SIB1 is notBarred (the access is not barred), the ATG UE determines that the cell is in a notBarred state. For example, the ATG UE may determine that the cell allows its access, which is not limited herein.

In some embodiments, for the ATG UE, if the value of the cellBarredNTN parameter broadcast in the SIB1 is Barred (the access is barred), the ATG UE determines that the cell is in a Barred state. For example, the ATG UE may determine that the cell does not allow its access, which is not limited herein.

In some embodiments, the ATG cell is regarded as a special NTN cell, which may also be understood as the ATG cell being used as an NTN cell, for example, the cell is an NTN cell, which is not limited herein.

In some embodiments, the ATG UE is regarded as the NTN UE, which may also be understood as the ATG UE being regarded as the NTN UE, which is not limited herein.

In this embodiment, the first information is received from the cell, in which the first information at least indicates the type of the cell. When the first information is the cellBarredNTN parameter and the indication information is the first value, it is determined that the ATG terminal is not allowed to access the cell. When the indication information is the second value, it is determined that the ATG terminal is allowed to access the cell. As such, it may be effectively indicated whether the ATG terminal is allowed to access the cell, which improves the flexibility of the access indication, and may be effectively applied to personalized communication scenarios.

In some embodiments, in the case that the first information includes only the cellBarredNTN parameter, the ATG UE may determine whether the ATG UE is allowed to access the cell based on the cellBarredNTN parameter, which is not limited herein.

In some embodiments, in the case that the first information includes the cellBarredNTN parameter and other parameters or information, the ATG UE may determine whether the ATG UE is allowed to access the cell based on the cellBarredNTN parameter and/or whether the first information includes the indication information, which is not limited herein.

In some embodiments, when the ATG UE determines whether the ATG UE is allowed to access the cell based on the cellBarredNTN parameter, the ATG UE may also ignore the cellBarredNTN parameter, or determine the value of the cellBarredNTN parameter is notBarred (the access is not barred), which is not limited herein.

In some embodiments, for the ATG UE, if the cellBarredNTN parameter is broadcast in the SIB1, the ATG UE may ignore the value of the cellBarredNTN parameter, or determine the value of the cellBarredNTN parameter is notBarred, which is not limited herein.

In some embodiments, the ATG cell is regarded as a special NTN cell, which may also be understood as the ATG cell being used as an NTN cell, for example, the cell is an NTN cell, which is not limited herein.

In some embodiments, in order to prevent an NTN UE that does not support the ATG from selecting the cell, the ATG cell may set the value of the cellBarredNTN parameter as barred (the access is barred), which is not limited herein.

In some embodiments, if the ATG cell sets the value of the cellBarredNTN parameter as barred (the access is barred), the NTN UE that does not support the ATG may directly determine not to select the cell based on the value (barred) of the cellBarredNTN parameter, which is not limited herein.

In some embodiments, in the case that the first information includes at least the cellBarredNTN parameter, the cellBarredNTN parameter may be directly ignored, and whether the ATG terminal is allowed to access the cell is determined based on whether the first information includes the indication information, which is not limited herein.

FIG. 7 is a flowchart of another method for access indication according to an embodiment of the present disclosure, which is performed by an ATG terminal. The method for access indication in this embodiment may be applied to the ATG terminal, which is not limited herein.

As shown in FIG. 7, the method may include but is not limited to the following steps S701-S702.

At S701, first information is received from a cell. The first information at least indicates a type of the cell.

For the detailed description of S701, reference may be made to the above embodiment, which will not be repeated here.

At S702, it is determined that the ATG terminal is not allowed to access the cell based on whether the first information includes indication information.

In some embodiments, in a case that the first information does not include the indication information, it is determined that the ATG terminal is not allowed to access the cell, which is not limited herein.

In some embodiments, in a case that the first information is the indication information, whether the ATG terminal is allowed to access the cell is determined based on the indication information, which is not limited herein.

In some examples, the indication information may be a first value such as barred (indicating that the access is barred or not allowed, etc.). Or, the indication information may be a second value such as not barred (indicating that the access is not barred or allowed, etc.), which is not limited herein.

In the embodiments of the present disclosure, the indication information is the first value, which may be understood that the indication information is configured as barred. The indication information is the second value, which may be understood that the indication information is configured as not barred, which is not limited herein.

In some embodiments, the indication information may be for example a cellBarredATG parameter, which is not limited herein.

In some embodiments, if the first information includes the cellBarredATG parameter, it may be clearly indicated that the cell supports access of the ATG UE (ATG UE is an optional example of the ATG terminal), which is not limited herein.

In some examples, the cellBarredATG parameter may be a first value such as barred (indicating that the access is barred or not allowed, etc.). Or, the cellBarredATG parameter may be a second value such as not barred (indicating that the access is not barred or allowed, etc.), which is not limited herein.

In the embodiment of the present disclosure, the cellBarredATG parameter is the first value, which may be understood that the cellBarredATG parameter is configured as barred. The cellBarredATG parameter is the second value, which may be understood that the cellBarredATG parameter is configured as not barred, which is not limited herein.

In some embodiments, the ATG cell broadcasts an indication of whether to bar the ATG UE (access of the ATG UE is barred) in the SIB1, such as the cellBarredATG parameter, in which the indication of whether to bar the ATG UE (access of the ATG UE is barred) may be an optional example of the indication information, which is not limited herein.

In some embodiments, whether the ATG terminal is allowed to access the cell may be determined directly based on whether the first information includes the indication information, which may be effectively applied to the ATG cell that broadcasts the SIB19 and the ATG cell that does not broadcast the SIB19.

In this embodiment, it may be effectively applied to the ATG cell that broadcasts the SIB19, the NTN UE that does not support the ATG is also effectively avoided from selecting the ATG cell, and the ATG terminal is effectively instructed to select the ATG cell. As such, the flexibility of access indication is effectively improved.

In the method for access indication according to the embodiment of the present disclosure, an optional implementation for determining whether the ATG terminal is allowed to access the cell may be also provided in the case that the first information includes or does not include the indication information. The indication information may indicate whether the ATG terminal is allowed to access the cell. The indication information may also indicate barred or not barred. The indication information may also be, for example, a cellBarredATG parameter, which is not limited herein.

In the method for access indication according to the embodiment of the present disclosure, it is determined that the ATG terminal is not allowed to access the cell in the case that the first information does not include the indication information, which may effectively prevent the ATG terminal from accessing a cell that is not allowed to access.

For example, for an ATG UE, if the cellBarredATG parameter is not broadcast in the SIB1, the ATG UE may determine that the ATG UE is not allowed to access the cell, so as to effectively prevent the ATG UE from accessing a cell that is not allowed to access (such as an NTN cell).

In the method for access indication according to the embodiment of the present disclosure, it is determined whether the ATG terminal is allowed to access the cell based on the indication information in the case that the first information includes the indication information, which may promptly determine whether the ATG terminal is allowed to access the cell.

In the method for access indication according to the embodiment of the present disclosure, in the case that the first information is the indication information, determining whether the ATG terminal is allowed to access the cell based on the first information includes any one of: when the indication information is a first value, determining that the ATG terminal is not allowed to access the cell; when the indication information is a second value, determining that the ATG terminal is allowed to access the cell.

For example, whether the ATG terminal is allowed to access the cell may be determined based on the value of the indication information.

For example, if the indication information is the cellBarredATG parameter, whether the ATG terminal is allowed to access the cell may be determined based on the value of the cellBarredATG parameter.

In the method for access indication according to the embodiment of the present disclosure, when the indication information is the first value (indicating that the ATG terminal is not allowed to access the cell), it is determined that the ATG terminal is not allowed to access the cell; when the indication information is the second value (indicating that the ATG terminal is allowed to access the cell), it is determined that the ATG terminal is not allowed to access the cell. As such, it may be promptly and accurately determined whether the ATG terminal is allowed to access the cell.

For example, for an ATG UE (an optional example of an ATG terminal), if the cellBarredATG parameter (an optional example of the indication information) broadcast in the SIB1 (an optional example of the message) indicates barred (the access is barred, an optional example of the indication information indicating that the ATG terminal is not allowed to access the cell), the ATG UE determines that the cell (an optional example of the cell) is in a barred state (an optional example of determining that the ATG terminal is not allowed to access the cell); if the cellBarredATG parameter broadcast in the SIB1 indicates notBarred (the access is not barred, an optional example of the indication information indicating that the ATG terminal is allowed to access the cell), the ATG UE determines that the cell is in a notBarred state (an optional example of determining that the ATG terminal is allowed to access the cell), which may be effectively applied to the application scenario where the ATG cell is not regarded as an NTN cell and the ATG cell does not broadcast the cellBarredNTN parameter in the SIB1, so as to prevent the NTN UE from accessing the ATG cell.

In the method for access indication according to the embodiment of the present disclosure, in the case that the first information includes the indication information, whether the ATG terminal is allowed to access the cell is determined based on the indication information and whether the first information includes the cellBarredNTN parameter. As such, it may be timely and accurately determined whether the ATG terminal is allowed to access the cell.

For example, whether the ATG terminal is allowed to access the cell may be determined based on the value of the cellBarredATG parameter and whether the first information includes the cellBarredNTN parameter, which is not limited herein.

In the method for access indication according to the embodiment of the present disclosure, in the case that the indication information indicates that the ATG terminal is allowed to access the cell and the first information includes the cellBarredNTN parameter, it is determined that the ATG terminal is allowed to access the cell; in the case that the indication information indicates that the ATG terminal is not allowed to access the cell or the first information does not include the cellBarredNTN parameter, it is determined that the ATG terminal is not allowed to access the cell.

For example, for an ATG UE (an optional example of the ATG terminal), if the cellBarredNTN parameter is broadcast in the SIB1 (an optional example of the message) (an optional example that the first information includes the cellBarredNTN parameter), and the cellBarredATG parameter (an optional example of the indication information) broadcast in the SIB1 indicates notBarred (the access is not barred, an optional example of the indication information indicating that the ATG terminal is allowed to access the cell), the ATG UE determines that the cell is in the notBarred state (an optional example of determining that the ATG terminal is allowed to access the cell); otherwise, the ATG UE determines that the cell is in the barred state (an optional example of determining that the ATG terminal is not allowed to access the cell), which may be effectively applied to the application scenario where the ATG cell is regarded as an NTN cell, so as to prevent the ATG UE from accessing the NTN cell.

In the method for access indication according to the embodiment of the present disclosure, in the case that the first information includes the cellBarredNTN parameter and the indication information, when the cellBarredNTN parameter or the indication information is the first value, it is determined that the ATG terminal is not allowed to access the cell; when the indication information is the second value, it is determined that the ATG terminal is allowed to access the cell; when the cellBarredNTN parameter and the indication information are the second value, it is determined that the ATG terminal is allowed to access the cell. As such, it may be timely and accurately determined whether the ATG terminal is allowed to access the cell.

For example, whether the ATG terminal is allowed to access the cell may be determined based on the value of the cellBarredATG parameter and the value of the cellBarredNTN parameter, which is not limited herein.

In the method for access indication according to the embodiment of the present disclosure, when the cellBarredNTN parameter or the indication information is the first value (indicating that the ATG terminal access is not allowed), it is determined that the ATG terminal is not allowed to access the cell; when the indication information is the second value (indicating that the ATG terminal access is allowed), it is determined that the ATG terminal is allowed to access the cell; when the cellBarredNTN parameter and the indication information are the second value (indicating that the ATG terminal access is allowed), it is determined that the ATG terminal is allowed to access the cell.

In the method for access indication according to the embodiment of the present disclosure, in the case that the cellBarredNTN parameter indicates that the ATG terminal is allowed to access and the indication information indicates that the ATG terminal is allowed to access the cell, it is determined that the ATG terminal is allowed to access the cell; in the case that the cellBarredNTN parameter or the indication information indicates that the ATG terminal is not allowed to access the cell, it is determined that the ATG terminal is not allowed to access the cell.

In some embodiments, whether the ATG terminal is allowed to access the cell may be determined based on an indication of the cellBarredNTN parameter for whether access of the ATG terminal is allowed and an indication of the indication information for whether the ATG terminal is allowed to access the cell, which is not limited herein.

For example, for an ATG UE (an optional example of the ATG terminal), if the cellBarredNTN parameter broadcast in the SIB1 (an optional example of the message) is notBarred (an optional example of the cellBarredNTN parameter indicating that the ATG terminal is allowed to access), and the cellBarredATG parameter broadcast in the SIB1 (an optional example of the indication information) indicates notBarred (the access is not barred, an optional example of the indication information indicating that the ATG terminal is allowed to access the cell), the ATG UE determines that the cell is in the notBarred state (an optional example of determining that the ATG terminal is allowed to access the cell); otherwise, the ATG UE determines that the cell is in the barred state (an optional example of determining that the ATG terminal is not allowed to access the cell), which may be effectively applied to the application scenario where the ATG cell is regarded as an NTN cell.

In some embodiments, the ATG cell is regarded as a special NTN cell, which may also be understood as the ATG cell being used as an NTN cell, for example, the cell is an NTN cell, which is not limited herein.

In the method for access indication according to the embodiment of the present disclosure, in the case that the cell is an ATG cell, the non-ATG terminal may be effectively prevented from accessing the ATG cell. In the case that the ATG cell is regarded as the NTN cell, the ATG terminal may be effectively prevented from accessing the NTN cell.

It needs to be noted that, reference to the above embodiments may made for the explanations of the methods in the following embodiments that are the same as or corresponding to those in the above embodiments, which will not be repeated here.

FIG. 8 is a flowchart of another method for access indication according to an embodiment of the present disclosure, which is performed by an access network device. The method for access indication in this embodiment may be applied to the access network device, which is not limited herein.

As shown in FIG. 8, the method may include but is not limited to the following step S801.

At S801, first information is sent to an ATG terminal. The first information at least indicates a type of a cell, and the first information is also used by the ATG terminal to determine whether the ATG terminal is allowed to access the cell.

In some embodiments, the ATG terminal may be, for example, an ATG UE, and the type of the cell may be, for example, an ATG cell, an NTN cell, etc., which is not limited herein.

Of course, the ATG terminal may also be any other possible ATG terminal, and the cell may also be any other possible cell, which is not limited herein.

In some embodiments, the access network device may send the first information to the ATG terminal, which is not limited herein.

In some embodiments, the access network device may send the first information to the ATG terminal in a broadcast manner. After receiving the first information, the ATG terminal may determine the type of the cell served by the access network device based on the first information, which is not limited herein.

In this embodiment, the access network device may send the first information to the ATG terminal. The first information at least indicates the type of the cell. The first information is also used by the ATG terminal to determine whether the ATG terminal is allowed to access the cell. As such, it may be effectively indicated whether the ATG terminal is allowed to access the cell.

In the method for access indication according to the embodiment of the present disclosure, the access network device may send to the ATG terminal, a message which includes first information, and the message is at least one of: a SIB1 or a SIB 19.

In some embodiments, the message may be, for example, a system message, which is not limited herein.

In some embodiments, the access network device may broadcast a system message, and the ATG terminal may receive the system message broadcast by the access network device, which is not limited herein.

In some embodiments, the first information may be carried in the message. For example, the first information may be carried in one or more of SIB1 and SIB19, which is not limited herein.

Therefore, the access network device may send a message to the ATG terminal to indicate the first information to the ATG terminal, which thus effectively improves the indication security of the first information and effectively avoids occupying additional indication overhead.

In the method for access indication according to the embodiment of the present disclosure, in the case that the first information is a cellBarredNTN parameter, when the cellBarredNTN parameter is a first value, the ATG terminal is not allowed to access the cell; when the cellBarredNTN parameter is a second value, the ATG terminal is allowed to access the cell.

In the method for access indication according to the embodiment of the present disclosure, in the case that the first information is indication information, when the indication information is a first value, the ATG terminal is not allowed to access the cell; when the indication information is a second value, the ATG terminal is allowed to access the cell.

The method for access indication according to the embodiment of the present disclosure, in the case that the first information includes both the cellBarredNTN parameter and the indication information, when the cellBarredNTN parameter or the indication information is a first value, the ATG terminal is not allowed to access the cell; when the indication information is a second value, the ATG terminal is allowed to access the cell; when the cellBarredNTN parameter and the indication information are the second value, the ATG terminal is allowed to access the cell.

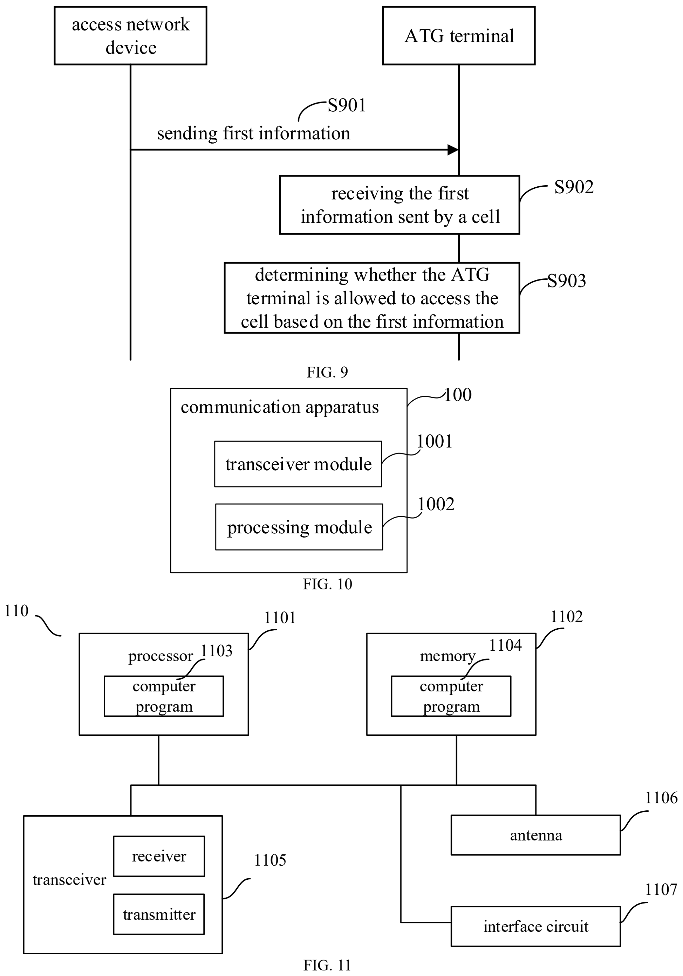

FIG. 9 is a flowchart of another method for access indication according to an embodiment of the present disclosure, which shows a diagram of interaction between an ATG terminal and an access network device.

As shown in FIG. 9, the method may include but is not limited to the following steps S901-S903.

At S901, an access network device sends first information to an ATG terminal, in which the first information at least indicates a type of a cell. The first information is also used by the ATG terminal to determine whether the ATG terminal is allowed to access the cell.

At S902, the ATG terminal receives the first information sent by the cell, in which the first information at least indicates the type of the cell.

At S903, the ATG terminal determines whether the ATG terminal is allowed to access the cell based on the first information.

Therefore, the access network device sends the first information to the ATG terminal, in which the first information at least indicates the type of the cell, and the first information is also used by the ATG terminal to determine whether the ATG terminal is allowed to access the cell. The ATG terminal receives the first information sent by the cell, in which the first information at least indicates the type of the cell, and determines whether the ATG terminal is allowed to access the cell based on the first information. As such, it is effectively determined whether the ATG terminal is allowed to access the cell.

FIG. 10 is a structural diagram of a communication apparatus according to an embodiment of the present disclosure. The communication apparatus 100 shown in FIG. 10 may include a transceiver module 1001 and a processing module 1002. The transceiver module 1001 may include a sending module and/or a receiving module. The sending module is used to implement a sending function, and the receiving module is used to implement a receiving function. The transceiver module 1001 may implement the sending function and/or the receiving function.

The communication apparatus 100 may be a network device (such as the access network device in the above method embodiments), or a device in the network device, or a device that may be used in conjunction with the network device. The communication apparatus 100 may also be a terminal (such as the ATG terminal in the above method embodiments), or a device in the terminal, or a device that may be used in conjunction with the terminal.

The communication apparatus 100, on the ATG terminal side, includes:
a transceiver module 1001, configured to receive first information sent by a cell, in which the first information at least indicates a type of the cell; and
a processing module 1002, configured to determine whether the ATG terminal is allowed to access the cell based on the first information.

In this embodiment, by receiving the first information sent by the cell, in which the first information at least indicates the type of the cell, and determining whether the ATG terminal is allowed to access the cell based on the first information, it is possible to effectively indicate whether the ATG terminal is allowed to access the cell.

The communication apparatus 100, on the access network device side, includes:
a transceiver module 1001, configured to send first information to the ATG terminal, in which the first information at least indicates a type of a cell, and the first information is also used by the ATG terminal to determine whether the ATG terminal is allowed to access the cell.

In this embodiment, the access network device may send the first information to the ATG terminal, in which the first information at least indicates the type of the cell and the first information is also used by the ATG terminal to determine whether the ATG terminal is allowed to access the cell, which may effectively indicate whether the ATG terminal is allowed to access the cell.

FIG. 11 is a structural diagram of a communication device according to an embodiment of the present disclosure. The communication device 110 may be a network device (such as the access network device in the above method embodiments), a terminal (such as the ATG terminal in the above method embodiments), a chip, a chip system, or a processor that supports the network device to implement the above method, or a chip, a chip system, or a processor that supports the terminal to implement the above method. The device may be used to implement the method described in the above method embodiments. For details, reference may be made to the description in the above method embodiments.

The communication device 110 may include one or more processors 1101. The processor 1101 may be a general-purpose processor or a dedicated processor. For example, it may be a baseband processor or a central processing unit. The baseband processor may be used to process communication protocols and communication data, and the central processing unit may be used to control communication devices (such as a base station, a baseband chip, a terminal, a terminal device chip, a DU or a CU, etc.), execute computer programs, and process data of the computer programs.

Optionally, the communication device 110 may further include one or more memories 1102, on which a computer program 1104 may be stored. The processor 1101 may store a computer program 1103. When the computer program 1103 or 1104 is executed by the processor 1101, the communication device 110 is caused to perform the method described in the above method embodiments.

Optionally, data may also be stored in the memory 1102. The communication device 110 and the memory 1102 may be provided separately or integrated together.

Optionally, the communication device 110 may further include a transceiver 1105 and an antenna 1106. The transceiver 1105 may be referred to as a transceiver unit, a transceiving machine, or a transceiver circuit, etc., and is used to implement transceiver functions. The transceiver 1105 may include a receiver and a transmitter. The receiver may be referred to as a receiving machine or a receiving circuit, etc., and is used to implement a receiving function. The transmitter may be referred to as a transmitting machine or a transmitting circuit, etc., and is used to implement the transmitting function.

Optionally, the communication device 110 may further include one or more interface circuits 1107. The interface circuit 1107 is used to receive code instructions and transmit them to the processor 1101. When the code instructions are executed by the processor 1101, the communication device 110 is caused to perform the method described in the above method embodiments.

In an implementation, the processor 1101 may include a transceiver for implementing receiving and transmitting functions. For example, the transceiver may be a transceiver circuit, or an interface, or an interface circuit. The transceiver circuit, interface or interface circuit used to implement the receiving and transmitting functions may be separate or integrated. The above-mentioned transceiver circuit, interface or interface circuit may be used for reading and writing codes/data, or the above-mentioned transceiver circuit, interface or interface circuit may be used for transmitting or delivering signals.

In an implementation, the processor 1101 may store a computer program 1103, and the computer program 1103 is running on the processor 1101, the communication device 110 may be caused to perform the method described in the above method embodiments. The computer program 1103 may be embedded/solidified in the processor 1101. In this case, the processor 1101 may be implemented by hardware.

In an implementation, the communication device 110 may include a circuit, which may implement the functions of sending, receiving, or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be a network device (such as the access network device in the above method embodiments), or a terminal (such as the ATG terminal in the method embodiments), but the scope of the communication device described in the present disclosure is not limited herein, and the structure of the communication device may not be limited to FIG. 11. The communication device may be a stand-alone device or may be part of a larger device. For example, the communication device may be:
(1) an independent integrated circuit IC, or a chip, or a chip system or a subsystem;
(2) a collection of one or more ICs. Optionally, the IC collection may also include storage components for storing data and computer programs;
(3) ASIC, such as modem;
(4) modules that may be embedded in other devices;
(5) a receiver, a terminal device, an intelligent terminal device, a cellular phone, a wireless device, a handheld device, a mobile unit, a vehicle-mounted device, a network device, a cloud device, an artificial intelligence device, etc.;
(6) Others, etc.

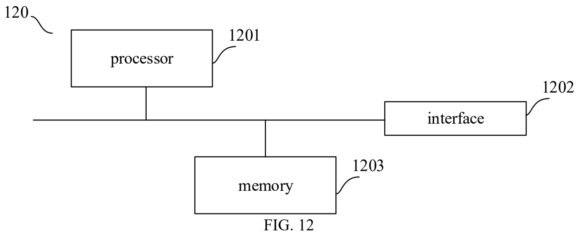

For the case where the communication device may be a chip or a chip system, reference may be made to the structural diagram of the chip shown in FIG. 12. The chip shown in FIG. 12 includes a processor 1201 and an interface 1202. There may be one or more processors 1201, and there may be a plurality of interfaces 1202.

In the case that the chip is used to implement the functions of the terminal (such as the ATG terminal in the above method embodiments) in the embodiments of the present disclosure, the processor 1201 is configured to implement the steps in FIG. 3 to FIG. 7 and FIG. 9.

In the case that the chip is used to implement the functions of the network device (such as the access network device in the above method embodiments) in the embodiments of the present disclosure, the processor 1201 is configured to implement the steps in FIG. 8 to FIG. 9.

Optionally, the chip further includes a memory 1203, which is used to store necessary computer programs and data.

Those skilled in the art may also understand that the various illustrative logical blocks and steps listed in the embodiments of the disclosure may be implemented by electronic hardware, computer software, or their combination. Whether such functionality is implemented in hardware or software depends on a specific application and overall system design requirements. Those skilled in the art may use various methods to implement the described functions for each specific application, but such implementation should not be understood as going beyond the protection scope of the embodiments of the disclosure.

The embodiments of the disclosure also provide a communication system, which includes the communication device in the above embodiment as a network device (such as the access network device in the above method embodiments), and the communication device in the above embodiment as a terminal (such as the ATG terminal in the above method embodiments). Alternatively, the system includes the communication device in the above embodiment of FIG.11 as a network device (such as the access network device in the above method embodiments), and the communication device in the above embodiment of FIG.11 as a terminal (such as the ATG terminal in the above method embodiments).

The disclosure also provides a readable storage medium on which instructions are stored, and when the instructions are executed by a computer, the functions of any one of the above method embodiments are implemented.

The disclosure also provides a computer program product, which implements the functions of any one of the above method embodiments when executed by a computer.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one computer-readable storage medium to another. For example, the computer program may be transferred from a website, a computer, a server, or a data center to another website, another computer, another server or another data center through a wired means (such as a coaxial cable, an optical fiber, a digital subscriber line (DSL)) or a wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a digital video disc (DVD)), or semiconductor media (e.g., a solid state disk (SSD)) etc.

Those skilled in the art may understand that the first, second, and other numerical numbers involved in the disclosure are only for convenience of description and are not used to limit the scope of the embodiments of the disclosure and also indicate the order.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, prestorage, pre-negotiation, pre-configuration, solidification, or pre-burning.

The embodiments of the present disclosure are not exhaustive but merely illustrative of some embodiments, and are not used as specific limitations to the scope of protection of the present disclosure. Each step in an embodiment may be implemented as an independent embodiment, and the steps may be arbitrarily combined, without contradiction. For example, the solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, the embodiments may be arbitrarily combined. For example, some or all steps of different embodiments may be arbitrarily combined, and a certain embodiment may be arbitrarily combined with optional implementations of other embodiments.

In each embodiment of the present disclosure, unless otherwise specified or if there are no logical conflict, the terms and/or descriptions between the embodiments are consistent and reference may be made to each other. The technical features in different embodiments may be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when the article such as "a", "an", and "the" is used in English translation herein, a noun following the article may be understood as a singular expression or a plural expression.

In the embodiments of the present disclosure, "a plurality of" refers to two or more.

In some embodiments, the terms "at least one," "one or more," "a plurality of," "multiple," etc. may be used interchangeably.

In some embodiments, the expressions such as "at least one of A or B", "A and/or B", "A in one case, B in another case", "in response to one case A, in response to another case B", etc. may include the following technical solutions according to the situations: A in some embodiments (i.e., A is executed independently of B); B in some embodiments (i.e., B is executed independently of A); selectively executing A or B in some embodiments (A and B are selectively executed); A and B in some embodiments (both A and B are executed). When there are more branches such as A, B, C, the above is also similar.

In some embodiments, the expressions such as "A or B" may include the following technical solutions according to the situations: A in some embodiments (i.e., A is executed independently of B); B in some embodiments (i.e., B is executed independently of A); selectively executing A or B in some embodiments (A and B are selectively executed). When there are more branches such as A, B, C, the above is also similar.

The prefixes such as "first" and "second" in the embodiments of the present disclosure are only used to distinguish different description objects and do not constitute any restrictions on the position, order, priority, quantity or content of the description objects. For the statement of the description objects, reference is made to the description in the context of the claims or embodiments, and no unnecessary restrictions should be constituted due to the use of prefixes. For example, if the description object is a "field", an ordinal number before "field" in the "first field" and "second field" does not limit the position or order between the "fields". The "first" and "second" do not limit whether the "fields" they modify are in the same message, nor do they limit the order between the "first field" and "second field". For another example, if the description object is a "level", an ordinal number before "level" in the "first level" and "second level" does not limit the priority between the "levels". For another example, a number of description objects is not limited by ordinal numbers and there may be one or more description objects. Taking the "first device" as an example, there may be one or more a number of "devices". In addition, the objects modified by different prefixes may be the same or different. For example, if the description object is a "device", then the "first device" and the "second device" may be the same device or different devices, and their types may be the same or different; for another example, if the description object is "information", then the "first information" and the "second information" may be the same information or different information, and their contents may be the same or different.

In some embodiments, "including A," "comprising A," "indicating A," and "carrying A" may be interpreted as directly carrying A or indirectly indicating A.

In some embodiments, the terms such as "in response to...", "in response to determining...", "in the case that/of...", "at the time of...", "when...", "in case that/of...", "if...", etc. may be used interchangeably.

In some embodiments, the terms such as "greater than", "greater than or equal to", "not less than", "more than", "more than or equal to", "not less than", "higher than", "higher than or equal to", "not less than", and "above" may be replaced with each other, and the terms such as "less than", "less than or equal to", "not greater than", "less than", "less than or equal to", "not more than", "lower than", "lower than or equal to", "not higher than", and "below" may be replaced with each other.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced by a terminal. For example, the various embodiments of the present disclosure may also be applied to a structure in which communication between the access network device, the core network device, the network device and the terminal is replaced by communication between a plurality of terminals (for example, also referred to as device-to-device (D2D), vehicle-to-everything (V2X), etc.). In this case, the terminal may be configured to have all or part of the functions of the access network device. Furthermore, the words "UL" and "DL" may be replaced with words corresponding to D2D communication (e.g., "side"). For example, a UL channel, a DL channel, etc. may be replaced by a side channel, and a UL, a DL, etc. may be replaced by a sidelink (SL).

In some embodiments, the terminal may be replaced by an access network device, a core network device, or a network device. In this case, the access network device, the core network device, or the network device may be configured to have all or part of the functions of the terminal.

In some embodiments, determining may be interpreted as judging, calculating, computing, processing, deriving, investigating, retrieving, looking up, search, inquiry, ascertaining, receiving, transmitting, input, output, accessing, resolving, selecting, choosing, establishing, comparing, "assuming," "expecting," "considering," broadcasting, notifying, communicating, forwarding, configuring, reconfiguring, allocating, mapping, assigning, and the like, but is not limited thereto.

Those skilled in the art may be aware that the units and algorithm steps of each example described in conjunction with the embodiments disclosed herein may be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and simplicity of description, the specific working processes of the systems, devices and units described above may be referred to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for access indication, performed by an air to ground (ATG) terminal, the method comprising:
receiving first information sent by a cell, wherein the first information at least indicates a type of the cell; and
determining whether the ATG terminal is allowed to access the cell based on the first information.

2. The method according to claim 1, wherein receiving the first information sent by the cell comprises:
receiving a message sent by the cell, wherein the message comprises the first information, and the message is at least one of:
a system information block 1 (SIB1); or
a system information block 19 (SIB19).

3. The method according to any one of claims 1-2, wherein the first information comprises at least one of:
a cell barred non-terrestrial network (cellBarredNTN) parameter; or
indication information, wherein the indication information indicates whether the ATG terminal is allowed to access the cell.

4. The method according to any one of claims 1 to 3, wherein in a case that the first information is the cellBarredNTN parameter, determining whether the ATG terminal is allowed to access the cell based on the first information comprises any one of:
determining that the ATG terminal is not allowed to access the cell;
determining that the ATG terminal is not allowed to access the cell in a case that the cellBarredNTN parameter is a first value; or
determining that the ATG terminal is allowed to access the cell in a case that the cellBarredNTN parameter is a second value.

5. The method according to any one of claims 1 to 3, wherein in a case that the first information is the indication information, determining whether the ATG terminal is allowed to access the cell based on the first information comprises any one of:
determining that the ATG terminal is not allowed to access the cell in a case that the indication information is a first value; or
determining that the ATG terminal is allowed to access the cell in a case that the indication information is a second value.

6. The method according to any one of claims 1 to 3, wherein in a case that the first information comprises the cellBarredNTN parameter and the indication information, determining whether the ATG terminal is allowed to access the cell based on the first information comprises any one of:
determining that the ATG terminal is not allowed to access the cell in a case that the cellBarredNTN parameter or the indication information is a first value;
determining that the ATG terminal is allowed to access the cell in a case that the indication information is a second value;
determining that the ATG terminal is allowed to access the cell in a case that the cellBarredNTN parameter is a second value and the indication information is the second value.

7. The method according to any one of claims 1 to 6, wherein the type of the cell comprises at least one of: an ATG cell; or a non-terrestrial network (NTN) cell.

8. A method for access indication, performed by an access network device, the method comprising:
sending first information to an air to ground (ATG) terminal, wherein the first information at least indicates a type of a cell, and the first information is also used by the ATG terminal to determine whether the ATG terminal is allowed to access the cell.

9. The method according to claim 8, wherein sending the first information to the ATG terminal comprises:
sending a message to the ATG terminal, wherein the message comprises the first information, and the message is at least one of:
a system information block 1 (SIB1); or
a system information block 19 (SIB19).

10. The method according to any one of claims 8 to 9, wherein the first information comprises at least one of:
a cell barred non-terrestrial network (cellBarredNTN) parameter; or
indication information, wherein the indication information indicates whether the ATG terminal is allowed to access the cell.

11. The method according to any one of claims 8 to 10, wherein in a case that the first information is the cellBarredNTN parameter:
the ATG terminal is not allowed to access the cell;
the ATG terminal is not allowed to access the cell in a case that the cellBarredNTN parameter is a first value; or
the ATG terminal is allowed to access the cell in a case that the cellBarredNTN parameter is a second value.

12. The method according to any one of claims 8 to 10, wherein in a case that the first information is the indication information:
the ATG terminal is not allowed to access the cell in a case that the indication information is a first value; or
the ATG terminal is allowed to access the cell in a case that the indication information is a second value.

13. The method according to any one of claims 8 to 10, wherein in a case that the first information comprises the cellBarredNTN parameter and the indication information:
the ATG terminal is not allowed to access the cell in a case that the cellBarredNTN parameter or the indication information is a first value;
the ATG terminal is allowed to access the cell in a case that the indication information is a second value;
the ATG terminal is allowed to access the cell in a case that the cellBarredNTN parameter is a second value and the indication information is the second value.

14. The method according to any one of claims 8 to 13, wherein the type of the cell comprises at least one of: an ATG cell; or a non-terrestrial network (NTN) cell.

15. A communication apparatus, comprising:
a transceiver module, configured to receive first information sent by a cell, wherein the first information at least indicates a type of the cell; and
a processing module, configured to determine whether an air to ground (ATG) terminal is allowed to access the cell based on the first information.

16. A communication apparatus, comprising:
a transceiver module, configured to send first information to an air to ground (ATG) terminal, wherein the first information at least indicates the type of the cell, and the first information is also used by the ATG terminal to determine whether the ATG terminal is allowed to access the cell.

17. A communication system, comprising:
the ATG terminal, configured to perform the method according to any one of claims 1 to 7, and
the access network device, configured to perform the method according to any one of claims 8 to 14.

18. A computer-readable storage medium storing instructions that, when executed, implement the method according to any one of claims 1 to 14.
